# EUROPEAN PATENT APPLICATION

(11) **EP 3 674 020 A1**
(43) Date of publication of application: **01.07.2020**
(21) Application number: 19208769.0
(22) Date of filing: 13.11.2019
(51) Int. Cl.: B23B 25/06, B23B 31/107, B23B 23/00, B23Q 3/18

(54) **A CONNECTION APPARATUS FOR TURNING LATHES**

(30) Priority: 31.12.2018 TR 201821259
(71) Applicant: Ditas Dogan Yedek Parca Imalat Ve Teknik Anonim Sirketi, Nigde (TR)
(72) Inventor: UNAL, ALI, NIGDE (TR)
(74) Representative: Kaya, Erdem

(57) **Abstract**

The. present invention relates to a connection apparatus (10) for providing compressing and fixing of the work piece (40) between a mirror (20) and a centre end (32), provided on a centre (30), in the turning lathe (1). As an improvement the subject matter connection apparatus (10) comprises an opening (15) provided on a front surface (14) such that a first end (41) of the work piece (40) having feather key form can be inserted, at least one compression element (11) which provides compressing and fixing of said first end (41) of the work piece (40) which is inserted into said opening (15), and a centre hole (13) provided on a rear surface (12).

## Description

### TECHNICAL FIELD

The present invention relates to a connection apparatus which provides processing of the work piece without forming centre hole on the work piece in universal, CNC and similar turning lathes

### PRIOR ART

Metal removing by providing movement to the part in the direction of the cutting tool is called turning, and the lathes, realizing these processes, are called turning lathes, In the lathe, cylindrical and conic surfaces are processed at the outer and inner parts generally by means of axial movement

The basic principle of lathe is very simple. Work piece is compressed by means of a special clamp called mirror. The mirror rotates and also rotates the work piece together (at a speed to be selected depending on the type and diameter of the work piece). A sharp tool cutter which is similar to a chisel removes metal therefrom as the work piece rotates and advances along the processed part. If the length of the processed part is long, then this part is turned by being taken between the centres, in other words, it is connected to the mirror from one side and the other end thereof is stopped to a centre connected to the centre body.

In order for the work piece to be stopped onto the centre from one end thereof and in order for it to be fixed there, a centre hole, having depth between 3 and 5 mm, is formed thereon before the work piece is connected to the turning lathe. Afterwards, the work piece is compressed by means of mirror from one end to the turning lathe, and an end of a centre is engaged to the centre hole formed at the other end thereof, and thereby the work piece is fixed.

In order to form centre hole on the work piece, the centre driller shall be connected by means of special apparatus Punching and connecting durations take 25 seconds in the average. Since centre hole shall be formed on each work piece before being connected to the turning lathe, both labor and production duration are excessive and this decreases production efficiency and increases the costs, Moreover, because of the problem of axial non-connecting of the material while the centre hole is being formed, axial eccentricity problem may occur, and this leads to wasting of the part.

As a result, because of all of the abovementioned problems, an improvement is required in the related technical field.

### BRIEF DESCRIPTION OF THE INVENTION

The present invention relates to a connection apparatus, for eliminating the above mentioned disadvantages and for bringing new advantages to the related technical field.

An object of the present invention is to provide processing in the turning lathe without needing to form a centre hole on each work piece

Another object of the present invention is to provide decreasing of the labor and production duration and to provide increasing of the production efficiency since there remains no need to form centre hole on the work piece and since the work piece can be processed in the lathe.

Another object of the present invention is to prevent part wasting which occurs in this process, since there remains no need to form centre holes on work pieces

In order to realize the abovementioned object and the objects which are to be deducted from the detailed description below, the present invention relates to a connection apparatus for providing compressing and fixing of the work piece between a mirror and a centre end, provided on a centre, in the turning lathe. Accordingly, the subject matter connection apparatus comprises an opening provided on a front surface such that a first end of the work piece having feather key form can be inserted, at least one compression element which provides compressing and fixing of said first end of the work piece which is inserted into said opening, and a centre hole provided on a rear surface. Thus, the work piece is fixed between the mirror and the centre end and can be processed in the turning lathe, without needing to form centre hole on each work piece.

### BRIEF DESCRIPTION OF THE FIGURES

Figure 1 is a representative lateral view of turning lathe where the subject matter connection apparatus is provided
Figure 2 is a representative lateral view where the subject matter connection apparatus is associated with the work piece and stopped to the centre.
Figure 3 is a representative perspective view where the subject matter connection apparatus is associated with the work piece and stopped to the centre.
Figure 4 is a representative lateral view of the subject matter connection apparatus,
Figure 5 is representative bottom view of the subject matter connection apparatus.

### DETAILED DESCRIPTION OF THE INVENTION

In this detailed description, the subject matter connection apparatus (10) is explained with references to examples without forming any restrictive effect only in order to make the subject more understandable

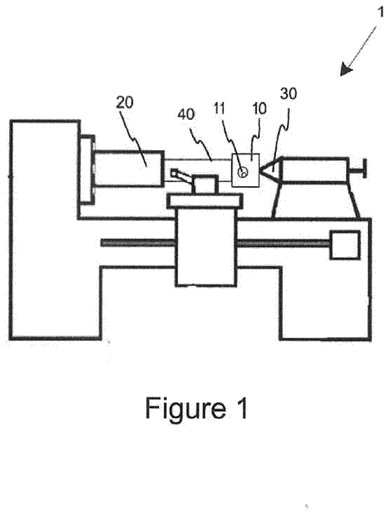

In Figure 1, a representative lateral view of turning lathe (1) where the subject matter connection apparatus (10) is provided is given. In said turning lathe (1), a work piece (40), whose second end (42) is compressed by a mirror (20), has a first end (41) fixed by means of a connection apparatus (10) and said first end (41) Is stopped to a centre (30).

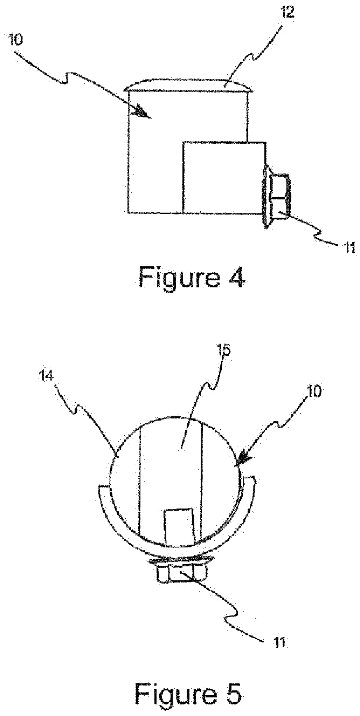

Said first end (41) of the work piece (40) has feather key form. As can be seen in Figure 5. on a front surface (14) of said connection apparatus (10), there is an opening (15), such that said first end (41) can be Inserted, which has a structure which is suitable to the form of the first end (41). In order to provide fixation of the first end (41) after the first end (41) engages to said opening (15), the first end (41) is compressed by means of a fixation element (11) provided on the connection apparatus (10). Thus, the first end (41) part of the work piece (40) is fixed into the opening (15).

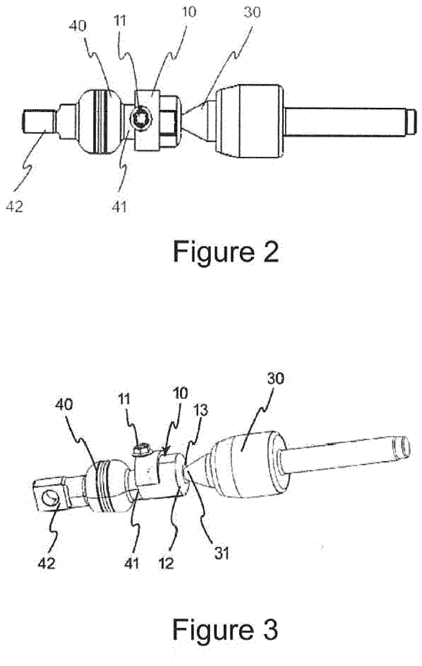

In Figure 3, a representative perspective view where the subject matter connection apparatus (10) is associated with the work piece (40) and slopped to the centre (30) is given. There is a centre hole (13) provided on a rear surface (12) of the connection apparatus (10). Said centre hole (13) has a form where a centre end (31) of said centre (30), provided in the turning lathe (1). can be inserted

In order to provide processing of the work piece (40) in the turning lathe (1), the first end (41) of the work piece (40) is engaged to the opening (15) provided on the front surface (14) of the connection apparatus (10) and is compressed and fixed by means of the fixation element (11) Said second end (42) of the work piece (40) engages to the mirror (20) and here, it is compressed and fixed by the mirror (20) As the centre end (31) is stopped to the centre hole (13) provided on said rear surface (12) of the connection apparatus (10) which engages onto the first end (41) of the work piece (40), the work piece (40) is fixed in the turning lathe (1) As the turning lathe (1) is operated, the work piece (40) fixed between the mirror (20) and the centre (30), rotates in the mirror (20) axis and the surface thereof is processed by a tool cutter

Thus, without needing to form centre hole (13) on each work piece (40), the work pieces (40) are processed and thanks to this, labor and production duration decrease, and wasting ratio decreases, and production efficiency increases,

The protection scope of the present invention is set forth in the annexed claims and cannot be restricted to the illustrative disclosures given above, under the detailed description. It is because a person skilled in the relevant art can obviously produce similar embodiments under the light of the foregoing disclosures, without departing from the main principles of the present invention.

### REFERENCE NUMBERS

1 Turning lathe
10 Connection apparatus
   11 Fixation element
   12 Rear surface
   13 Centre hole
   14 Front surface
   15 Opening
20 Mirror
30 Centre
   31 Centre end
40 Work piece
   41 First end
   42 Second end

## Claims

1. A connection apparatus (10) for providing compressing and fixing of the work piece (40) between a mirror (20) and a centre end (32), provided on a centre (30), in the turning lathe (1), wherein the subject matter connection apparatus (10) comprises an opening (15) provided on a front surface (14) such that a first end (41) of the work piece (40) having feather key form can be inserted, at least one compression element (11) which provides compressing and fixing of said first end (41) of the work piece (40) which is inserted into said opening (15), and a centre hole (13) provided on a rear surface (12).
